# FASCICULE DE BREVET EUROPEEN

(11) **EP 3 728 934 B1**
(45) Date de publication et mention de la délivrance du brevet: **06.04.2022**
(21) Numéro de dépôt: 18839836.6
(22) Date de dépôt: 17.12.2018
(51) Int. Cl.: F17C 13/04

(54) **DISPOSITIF ET PROCEDE DE DISTRIBUTION D'UN FLUIDE DANS UNE INSTALLATION INDUSTRIELLE**
VORRICHTUNG UND VERFAHREN ZUR VERTEILUNG EINES FLUIDS IN EINER INDUSTRIELLEN ANLAGE
DEVICE AND METHOD FOR DISTRIBUTING A FLUID IN AN INDUSTRIAL FACILITY

(30) Priorité: 22.12.2017 FR 1762899
(43) Date de publication de la demande: 28.10.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: APERT, Zahra, 75007 Paris (FR); DEMOISY, François, 1450 Great (BE); PIVARD, Alban, 94170 Le Perreux (FR)
(74) Mandataire: Air Liquide
(86) Numéro de dépôt international: PCT/FR2018/053350
(87) Numéro de publication internationale: WO 2019/122668

(56) Documents cités:
- EP-A1- 3 002 497
- DE-A1-102004 033 453
- DE-A1-102016 203 330
- US-A- 4 905 727

## Description

L'invention se rapporte au domaine des installations industrielles mettant en œuvre un ou plusieurs fluides, et elle concerne plus particulièrement la distribution de ces fluides au sein de telles installations.

De manière connue, de telles installations comportent au moins une vanne de distribution, également dénommée vanne de production, agencée sur une ligne de distribution afin de contrôler la distribution de fluide entre une zone amont, ou zone de production, de laquelle est issu le fluide transporté par la ligne de distribution, et une zone aval vers laquelle est acheminé le fluide transporté par la ligne de distribution. On entend ici par "ligne" la ou les canalisations par lesquelles le fluide est transporté en vue de sa distribution dans l'installation concernée.

Les installations visées par l'invention comportent également, de manière connue, au moins une vanne, dénommée vanne de décharge, configurée pour évacuer le fluide lorsque la demande aval est ralentie ou stoppée et qu'un ralentissement ou un arrêt éventuels de la fourniture de fluide en amont n'est pas envisageable ou ne suffit pas à éviter les surcharges dans la ligne de distribution.

La vanne de décharge permet donc d'éviter ou, au moins, de limiter, de telles surcharges, qui risquent d'endommager des composants de l'installation en amont de la vanne de distribution ou de détériorer la qualité du fluide de production. La vanne de décharge est classiquement agencée sur une ligne de décharge qui communique avec une canalisation principale de distribution du fluide dont elle constitue, par exemple, une dérivation. La vanne de décharge peut, par exemple, être une vanne de mise à l'air ambiant ou une vanne de mise à la torche.

Plus précisément, la vanne de décharge est commandée à s'ouvrir dès lors qu'une perturbation pouvant conduire à une surcharge est détectée sur la ligne de distribution : par exemple, lorsque le fluide est un gaz, dès lors qu'une surpression de ce gaz est détectée sur la ligne de distribution.

Les procédés connus pour le pilotage d'une telle vanne de décharge comprennent généralement une étape de comparaison de la valeur d'un paramètre caractéristique de la distribution de fluide avec une valeur seuil préalablement définie. L'ouverture et/ou la fermeture de la vanne de décharge sont alors gouvernées par le résultat de cette comparaison. Le paramètre caractéristique de la distribution de fluide peut, par exemple, être, dans le cas où le fluide est un gaz, la pression de celui-ci, ou, dans le cas où le fluide est un liquide, le débit de ce dernier. La valeur seuil est classiquement définie à partir d'une valeur du paramètre caractéristique considéré, prédéfinie par étalonnage de la ligne de distribution, valeur à laquelle est appliquée une valeur de marge de sécurité préalablement définie.

On comprend ici aisément le problème technique qui se pose lors de la définition de cette valeur de marge de sécurité : si la valeur de marge de sécurité est trop importante, l'ouverture de la vanne de décharge ne se produira que pour d'importantes variations du paramètre considéré par rapport à la valeur prédéfinie par étalonnage, et les composants de la ligne de distribution risquent d'être endommagés ou perturbés en raison d'une sensibilité insuffisante de la commande de la vanne de décharge.

En revanche, si la valeur de marge de sécurité est trop faible, la vanne de décharge sera commandée à s'ouvrir pour de faibles variations du paramètre considéré autour de la valeur prédéfinie par étalonnage : il y aura risque d'ouverture intempestive de cette vanne de décharge et, donc, risque de perte de fluide et surcoût potentiel du procédé mis en œuvre par l'installation industrielle.

L'invention a pour but de pallier ces inconvénients et de proposer une solution pour gouverner l'ouverture ou la fermeture de la vanne de décharge de manière aussi précise que possible pour éviter toute perte de fluide, tout en garantissant la protection des composants de la ligne de distribution de fluide.

DE102004033453 décrit un dispositif selon le préambule de la revendication 1.

Dans ce but, l'invention a pour objet un dispositif de distribution d'un fluide dans une installation industrielle, le dispositif de distribution comprenant au moins une canalisation de distribution de fluide configurée pour transporter le fluide entre une zone amont et un client aval du dispositif de distribution, une canalisation de décharge issue de la canalisation de distribution, une vanne de distribution placée sur la canalisation de distribution et contrôlant la distribution du fluide entre la zone amont et le client aval, une vanne de décharge placée sur la canalisation de décharge, ainsi que des moyens de mesure, en temps réel, d'un paramètre caractéristique du fluide au sein de l'une des canalisations, caractérisé en ce que le dispositif de distribution comprend un module de calcul d'une valeur seuil glissante du paramètre caractéristique, ainsi que des moyens configurés pour commander l'ouverture ou la fermeture progressive partielle de la vanne de décharge en fonction du résultat de la comparaison de ladite valeur seuil glissante avec une valeur instantanée du paramètre caractéristique mesurée par les moyens de mesure.

On entend ici par canalisation un ensemble d'un ou plusieurs conduits de transport du fluide : le terme de canalisation s'applique donc, dans ce qui suit, indifféremment aux tubes, tuyaux, flexibles et éléments de raccordement dans lesquels le fluide considéré circule.

Avantageusement, l'invention prévoit que la canalisation de décharge débouche directement dans la canalisation de distribution. Il faut comprendre ici que la canalisation de décharge et la canalisation de distribution communiquent entre elles, de telle manière que le fluide acheminé dans la canalisation de distribution peut être facilement acheminé, depuis cette dernière, vers la canalisation de décharge.

A titre d'exemple non limitatif, la canalisation de décharge peut être configurée comme une dérivation de la canalisation de distribution. En d'autres termes, le fluide, qui circule préférentiellement dans la canalisation de distribution peut être acheminé en totalité ou en partie seulement dans cette dernière, l'autre partie du fluide étant, dans ce cas, dérivée vers la canalisation de décharge.

Selon la nature de l'installation industrielle considérée, le client aval, vers lequel est transporté le fluide, peut-être, à titre d'exemples non limitatifs, une partie de l'installation dans laquelle est effectué un procédé industriel ou une zone particulière d'un tel procédé dans laquelle est effectuée une étape spécifique de ce procédé.

Plus généralement, le client aval doit être ici entendu comme la partie de l'installation industrielle vers laquelle le fluide considéré est préférentiellement acheminé par la canalisation de distribution, la canalisation de décharge permettant de dévier tout ou partie du fluide de la canalisation de distribution, par exemple lorsque la demande du client aval est ralentie ou stoppée.

Comme il a été évoqué précédemment, la vanne de décharge commande l'évacuation de tout ou partie du fluide pour éviter toute surcharge de la canalisation de distribution et des équipements (à titre d'exemples non limitatifs : de l'instrumentation) éventuellement associés à cette dernière. Selon différents exemples de réalisation, non exhaustifs, la vanne de décharge peut être une vanne de mise à l'air libre ou une vanne de mise à la torche.

Avantageusement, le dispositif de distribution selon l'invention comprend un module de calcul d'une valeur seuil glissante d'un paramètre caractéristique du fluide transporté dans la canalisation de distribution. Le paramètre caractéristique est ici avantageusement une grandeur physico-chimique représentative du fluide et/ou de son transport dans la canalisation de distribution.

Plus précisément, le paramètre caractéristique est une grandeur dont les variations sont suffisamment rapides et significatives pour que ces variations puissent servir de base à la définition d'une valeur seuil pour la commande de la vanne de décharge.

Par exemple, lorsque le fluide considéré est un gaz, le paramètre caractéristique choisi peut être, de manière non exhaustive, la pression, la température, le débit ou la composition de celui-ci. Lorsque le fluide considéré est un liquide ou un mélange de liquide et de gaz, le paramètre caractéristique choisi peut être, de manière non exhaustive, le débit, la température, le niveau ou la composition de celui-ci. Il est à noter que le paramètre caractéristique choisi peut, sans que cela nuise à l'invention, également être une combinaison de différents paramètres représentatifs du fluide ou de son transport au sein de la canalisation de distribution.

Selon l'invention, la valeur seuil glissante du paramètre caractéristique choisi est définie par ajout d'une valeur fixe de référence préalablement définie à une valeur moyenne glissante calculée en temps réel par le module de calcul précité. Plus précisément, l'invention prévoit que la valeur moyenne glissante précitée est calculée, sur un intervalle de temps fixe, glissant, à partir des valeurs mesurées par les moyens de mesure en temps réel mis en œuvre dans le dispositif de distribution selon l'invention.

Par temps réel, il faut comprendre ici que l'intervalle de temps, fixe et prédéfini, séparant deux calculs consécutifs de cette valeur moyenne glissante, est suffisamment faible pour refléter le plus grand nombre possible de variations significatives de la valeur du paramètre caractéristique au cours du temps. Selon différentes variantes de réalisation, cet intervalle de temps peut être défini comme sensiblement égal à celui qui sépare deux mesures consécutives du paramètre caractéristique, ou il peut être prédéfini à une valeur fixe arbitraire.

Cette notion du "temps réel" s'applique également, dans le cadre de l'invention, aux moyens de mesure précédemment définis, et doit être comprise, dans le cadre de l'invention, dans le sens où l'intervalle de temps qui sépare deux mesures consécutives du paramètre caractéristique choisi est défini de telle manière que les moyens de mesure précités puissent détecter le plus grand nombre possible de variations significatives de ce paramètre.

Les moyens de mesure en temps réel précédemment définis pourront donc être, selon différentes variantes de réalisation de l'invention, des moyens de mesure en temps réel au sens couramment attribué à cette terminologie, ou des moyens programmés pour effectuer des mesures à intervalles de temps prédéfinis selon les critères décrits précédemment.

Il résulte de ce qui précède que, selon l'invention, le module de calcul est configuré pour calculer une moyenne des valeurs instantanées du paramètre caractéristique choisi sur un intervalle de temps fixe, prédéfini, dont l'une des bornes est actualisée en permanence. La valeur moyenne calculée est donc bien une valeur moyenne glissante, en ce sens qu'elle est actualisée en permanence par l'actualisation des valeurs instantanées du paramètre caractéristique aux bornes de l'intervalle de temps sur lequel ladite moyenne est calculée.

Selon un mode avantageux de réalisation, non exclusif, de l'invention, la valeur fixe de référence ajoutée à la valeur moyenne glissante pour obtenir la valeur seuil glissante peut être, par exemple, définie par étalonnage préalable de la ligne de distribution ou par étalonnage préalable du client aval.

Elle peut également, selon d'autres modes de réalisation, être définie par le calcul en fonction des paramètres globaux de fonctionnement de l'installation industrielle dans son ensemble.

Dans tous les cas, elle constitue une forme de marge de sécurité à la commande de l'ouverture et de la fermeture de la vanne de décharge. Toutefois, la valeur seuil glissante étant actualisée en permanence, cette valeur fixe de référence pourra être choisie plus faible que la valeur fixe de référence classiquement ajoutée à la valeur fixe du paramètre caractéristique choisi utilisée pour le pilotage de la vanne de décharge dans les systèmes tels que connus par l'état de la technique.

Avantageusement, le dispositif de distribution selon l'invention comprend également des moyens configurés pour commander l'ouverture ou la fermeture progressive partielle de la vanne de décharge en fonction du résultat de la comparaison de la valeur seuil glissante précitée avec une valeur instantanée du paramètre caractéristique considéré.

Selon un mode de réalisation préféré, mais non exclusif, l'invention prévoit que la valeur instantanée prise en compte pour la comparaison précitée est la dernière valeur instantanée mesurée du paramètre caractéristique choisi.

Selon un autre mode de réalisation, la valeur instantanée prise en compte pour cette comparaison peut être, de manière non limitative, la valeur instantanée finale prise en compte pour le calcul de la valeur seuil glissante utilisée pour la comparaison.

Avantageusement, dernière valeur instantanée mesurée du paramètre caractéristique et valeur instantanée finale prise en compte pour le calcul de la valeur seuil glissante utilisée pour la comparaison précitée peuvent être confondues.

L'ouverture et/ou la fermeture progressives partielles de la vanne de décharge permettent d'éviter toute variation brutale du paramètre caractéristique dans la canalisation de distribution résultant de l'ouverture ou de la fermeture de la vanne de décharge, variation brutale qui pourrait donner lieu à un phénomène connu sous la désignation de "coup de bélier", dont les conséquences peuvent être néfastes pour les différentes canalisations de distribution et de décharge ainsi que pour les équipements associés à ces canalisations et/ou au client aval.

Dans ce but, la vanne de décharge peut, à titre d'exemple non limitatif, être une vanne pilotée par un moteur pas à pas.

Avantageusement, le dispositif de distribution selon l'invention peut également présenter une ou plusieurs des caractéristiques suivantes, prises séparément ou en combinaison :
- le module de calcul est configuré pour fixer la valeur seuil glissante précédemment définie à une valeur constante dès lors que la valeur instantanée mesurée du paramètre caractéristique choisi a franchi la valeur seuil glissante actualisée en temps réel et que le taux d'ouverture de la vanne de décharge atteint une valeur prédéfinie. Cette caractéristique de l'invention permet une stabilisation plus rapide du paramètre caractéristique mesuré, notamment lorsque l'évolution de ce dernier est lente, ais continue et inexorable. Le taux d'ouverture de la vanne de décharge est ici, par exemple, un pourcentage d'ouverture de cette vanne, l'ouverture complète de la vanne correspondant à un taux de 100%. Avantageusement, la valeur constante précitée est choisie sensiblement égale à la valeur instantanée du paramètre caractéristique choisi, mesurée lorsque simultanément le taux d'ouverture de la vanne de décharge atteint une valeur prédéfinie. Préférentiellement, le taux prédéfini d'ouverture de la vanne de décharge au-delà duquel le module de calcul est configuré à fixer la valeur seuil glissante à la valeur constante précitée est de l'ordre de quelques pourcents, par exemple de l'ordre de 5%.
- les moyens de commande sont configurés pour commander une pré-ouverture préalable de la vanne de décharge à partir d'une information de fonctionnement préalablement définie de la ligne de distribution. En d'autres termes, le dispositif de distribution selon l'invention comprend, dans ce cas, un module configuré pour transmettre aux moyens de commande une information prédéfinie de fonctionnement de la ligne de distribution de telle manière que la vanne de décharge soit commandée à s'ouvrir, partiellement ou totalement, avant même que la valeur instantanée, mesurée en temps réel, du paramètre caractéristique choisi, ne franchisse la valeur seuil glissante précédemment définie. Ceci permet, en particulier, d'anticiper toute variation importante, prévue, brutale ou non, du paramètre caractéristique choisi.

L'invention s'étend également à un procédé de distribution d'un fluide dans une installation industrielle, qui comporte :
- une étape de mesure, en temps réel, d'un paramètre caractéristique du fluide, par des moyens de mesure placés sur une canalisation de distribution de ce fluide,
- une étape de calcul d'une valeur moyenne glissante du paramètre caractéristique sur un intervalle de temps fixe prédéfini,
- une étape de définition d'une valeur seuil glissante à partir de la valeur moyenne glissante précitée,
- une étape de comparaison de la valeur seuil glissante à une valeur instantanée, mesurée en temps réel, du paramètre caractéristique,
- une étape d'ouverture partielle progressive, en fonction du résultat de la comparaison effectuée lors de l'étape précédente, d'une vanne de décharge placée sur une canalisation de décharge issue de la canalisation de distribution.

La valeur seuil glissante étant calculée, comme il a été précédemment décrit, à partir d'une valeur moyenne actualisée en permanence, puis comparée à une valeur instantanée mesurée en temps réel du paramètre caractéristique choisi, le procédé selon l'invention permet bien de réaliser un pilotage précis et optimisé de la vanne de décharge.

Selon différents modes de réalisation de l'invention et, plus précisément, selon le paramètre caractéristique choisi, l'ouverture de la vanne de décharge pourra être commandée lorsque la valeur instantanée du paramètre caractéristique choisi sera supérieure à la valeur seuil glissante précédemment définie, ou elle pourra être commandée lorsque la valeur instantanée du paramètre caractéristique choisi sera inférieure à cette valeur seuil glissante.

Avantageusement, le procédé selon l'invention peut également présenter une ou plusieurs des caractéristiques suivantes, prises séparément ou en combinaison :
- l'intervalle de temps prédéfini sur lequel est calculée la valeur moyenne glissante du paramètre caractéristique est au moins supérieur à 10 secondes.
- l'intervalle de temps prédéfini sur lequel est calculée la valeur moyenne glissante du paramètre caractéristique est de l'ordre de 30 à 40 secondes.
- le procédé selon l'invention comprend une étape de maintien de la valeur seuil glissante à une valeur constante du paramètre caractéristique choisi, dès lors que l'ouverture partielle de la vanne de décharge atteint un taux prédéfini, par exemple de l'ordre de quelques pourcents, de l'ouverture complète.

- la valeur prise comme valeur seuil constante dès lors que l'ouverture de la vanne de décharge atteint le taux prédéfini précité est la valeur instantanée, mesurée, du paramètre caractéristique pour laquelle la valeur seuil glissante précédemment définie est franchie. En d'autres termes, le procédé selon l'invention prévoit que, dès lors que la valeur instantanée, mesurée, du paramètre caractéristique choisi, a franchi la valeur seuil glissante calculée en temps réel par le module de calcul, et que le taux d'ouverture de la vanne de décharge a atteint une valeur prédéfinie, la valeur seuil est fixée, constante, par le module de calcul, à la valeur instantanée de franchissement de la valeur seuil glissante.
- le procédé selon l'invention comporte une étape de pré-ouverture de la vanne de décharge, commandée à partir d'une information de fonctionnement prédéfinie. Ceci s'applique plus particulièrement au cas où des variations importantes du paramètre caractéristique choisi peuvent être anticipées dans le fonctionnement de la ligne de distribution ou de l'installation industrielle dans son ensemble. Dans ce cas, l'étape de pré-ouverture de la vanne de décharge permet d'anticiper la variation prévue du paramètre caractéristique et, ainsi, de protéger par anticipation les composants de la ligne de distribution ainsi que le client aval.
- la vanne de décharge est reliée à l'air libre, une torche, ou une zone de stockage ou de récupération.

L'invention permet ainsi, par la mise en œuvre de moyens simples de mesure, de calcul et de commande, de réaliser un pilotage ajusté en permanence et en temps réel de l'ouverture et/ou de la fermeture de la vanne de décharge, atteignant ainsi les buts qu'elle s'était fixés.

Il ressort, de plus, de ce qui précède, que l'invention s'applique à tout type de fluide, qu'il s'agisse d'un gaz, d'un mélange de gaz, d'un liquide, d'un mélange de liquides, ou d'un mélange de liquides et de gaz.

Plus particulièrement, le fluide peut être un gaz et le paramètre caractéristique du fluide est la pression de ce dernier.

D'autres caractéristiques et avantages de la présente invention apparaitront plus clairement à l'aide de la description et des dessins parmi lesquels :

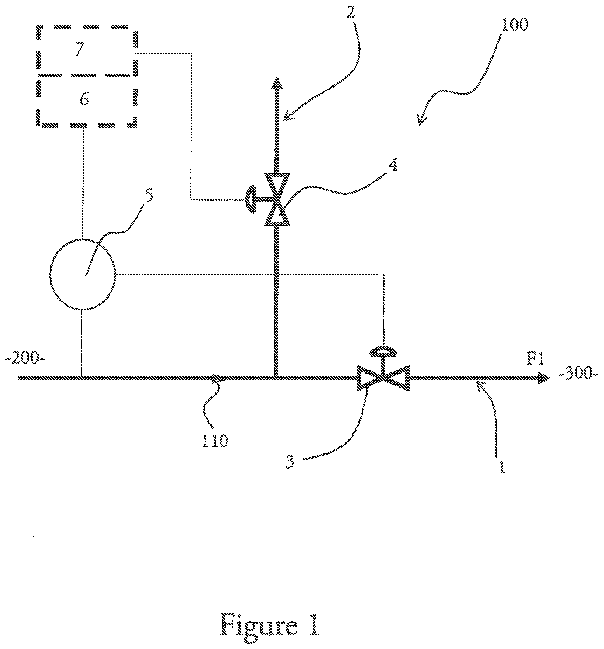

- la figure 1 est une illustration schématique d'un dispositif de distribution de fluide selon l'invention,

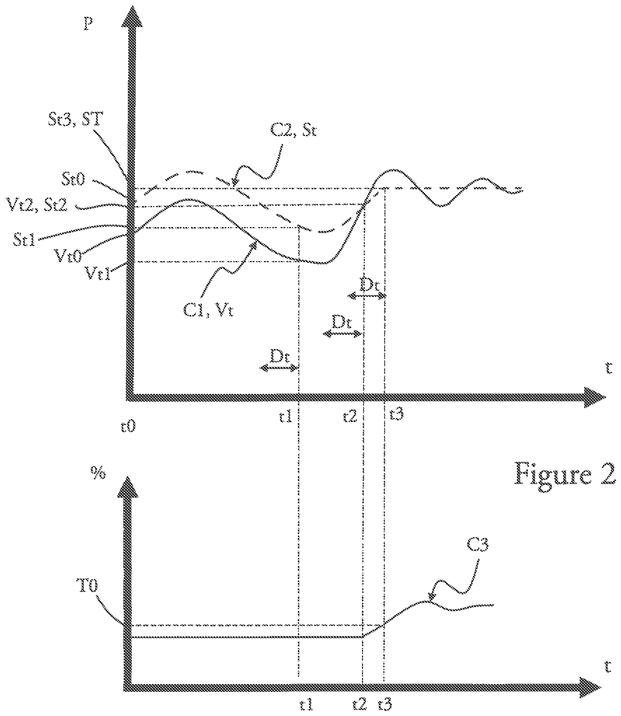

- la figure 2 présente respectivement les variations dans le temps d'un paramètre caractéristique d'un fluide transporté dans une ligne de distribution telle que celle illustrée schématiquement par la figure 1, ainsi que les variations correspondantes de la valeur seuil glissante et de l'ouverture d'une vanne de décharge d'une telle ligne de distribution, selon un premier mode de réalisation de l'invention.

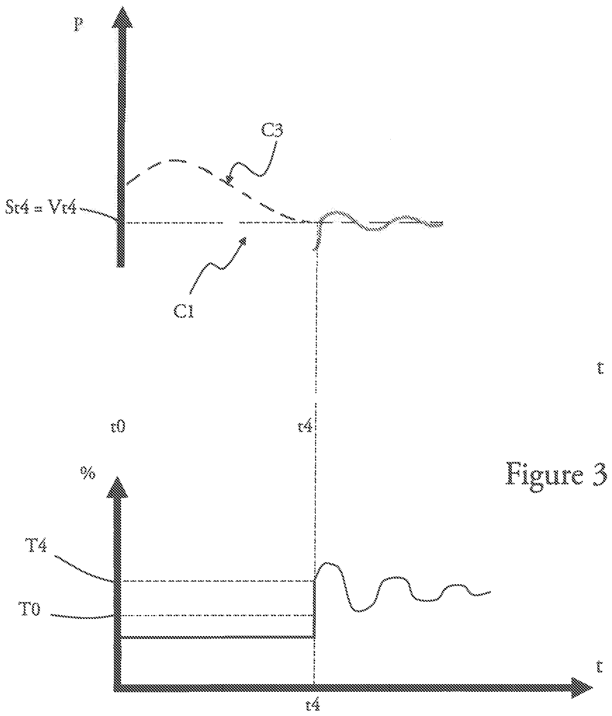

- et la figure 3 présente respectivement les variations dans le temps d'un paramètre caractéristique d'un fluide transporté dans une ligne de distribution telle que celle illustrée schématiquement par la figure 1, ainsi que les variations correspondantes de la valeur seuil glissante et de l'ouverture d'une vanne de décharge d'une telle ligne de distribution, selon un deuxième mode de réalisation de l'invention.

Il faut tout d'abord noter que si les figures exposent l'invention de manière détaillée pour sa mise en œuvre, ces figures peuvent bien entendu servir à mieux définir l'invention le cas échéant.

Toutefois, il est à retenir que ces figures n'exposent qu'une partie des exemples de réalisation possibles selon l'invention.

La figure 1 illustre schématiquement un dispositif de distribution de fluide 100 selon l'invention.

Le dispositif de distribution de fluide 100 fait avantageusement partie d'une installation industrielle non représentée sur la figure 1. Le dispositif de distribution 100 comprend une canalisation de distribution 1, configurée pour transporter, au sein de l'installation industrielle précitée, un fluide 110, représenté à titre d'exemple sur la figure 1, entre une zone amont 200 et un client aval 300 : le fluide 110 circule ainsi selon la direction représentée par la flèche F1 sur la figure 1. A titre d'exemples non exclusifs, la zone amont 200 est, par exemple, une zone de stockage du fluide 110, ou une partie de l'installation industrielle dans laquelle le fluide 110 est obtenu, par exemple comme produit principal ou comme produit secondaire d'une ou plusieurs réactions chimiques.

Le client aval 300 est la partie de l'installation industrielle vers laquelle est transporté le fluide 110.

A titre d'exemples non exclusifs, le client aval 300 peut être la partie de l'installation industrielle dans laquelle est conduit le procédé pour lequel ladite installation industrielle a été conçue, ou le client aval 300 peut être une partie de cette installation industrielle dans laquelle est conduite une étape spécifique dudit procédé.

Selon différents modes de réalisation de l'invention, le fluide 110 peut être indifféremment un gaz, un mélange de gaz, un liquide, un mélange de liquides, ou un mélange de liquides et de gaz.

En référence à la figure 1, le dispositif de distribution 100 selon l'invention comprend également une canalisation de décharge 2 issue de la canalisation de distribution 1, ainsi qu'une vanne de distribution 3 placée sur la canalisation de distribution 1 et une vanne de décharge 4 placée sur la canalisation de décharge 2. La vanne de distribution 3 contrôle la distribution du fluide 110 vers le client aval 300, la vanne de décharge 4 est, par exemple, une vanne de remise à l'air libre ou une vanne de mise à la torche. Selon d'autres exemples de réalisation, la vanne de décharge 4 peut être une vanne mettant en communication le fluide 110 acheminé dans la canalisation de décharge 2 avec une zone temporaire de stockage ou une zone de récupération, non représentées sur la figure 1. L'ensemble formé par la canalisation de distribution 1, la canalisation de décharge 2, et les vannes, respectivement, de distribution 3 et de décharge 4, constitue une ligne de distribution du fluide 110 au sein de l'installation industrielle dans laquelle est placé le dispositif de distribution 100 selon l'invention.

La canalisation de distribution 1 est, au sein de l'installation industrielle, la voie préférentielle de transport du fluide 110 entre la zone amont 200 et le client aval 300. Il peut toutefois se produire, au sein de l'installation industrielle, que la demande en fluide 110 par le client aval 300 soit ralentie ou même stoppée : l'invention se rapporte au cas où, la demande en fluide 110 étant ralentie ou stoppée par le client aval 300, il n'est pas possible ou pas souhaitable, pour l'installation industrielle, de ralentir ou de stopper, en amont, l'acheminement du fluide 110 depuis la zone amont 200.

Dans ce cas, la partie excédentaire de fluide 110 est acheminée dans la canalisation de décharge 2, issue de la canalisation de distribution 1, pour être évacuée, par ouverture de la vanne de décharge 4, hors de la ligne de distribution précédemment définie.

Telle qu'elle est schématiquement représentée sur la figure 1, la canalisation de décharge 2 est branchée en dérivation sur la canalisation de distribution 1. Ainsi, lorsque la demande en fluide 110 est ralentie ou stoppée par le client aval 300, tout ou partie du fluide 110 peut être acheminée vers la canalisation de décharge 2. La vanne de décharge 4 doit alors être commandée pour permettre l'évacuation du fluide 110 circulant dans la canalisation de décharge 2 vers, selon le cas, l'air libre, une torche, ou une zone de stockage ou de récupération comme indiqué précédemment.

Avantageusement, l'ouverture de la vanne de décharge 4, ainsi que, ensuite, sa fermeture, sont gouvernées par une indication fournie par des moyens 5 de mesure en temps réel d'un paramètre P caractéristique du fluide 110. Selon l'invention, les moyens de mesure 5 réalisent, en temps réel, la mesure d'un paramètre P préalablement choisi, caractéristique du fluide 110. Comme il a été évoqué précédemment, on entend ici par temps réel que les moyens de mesure 5 sont configurés pour que l'intervalle de temps séparant deux mesures consécutives soit défini de telle manière que le plus grand nombre possible de variations significatives du paramètre caractéristique P soient détectées. Les moyens de mesure 5 peuvent donc, selon différents modes de réalisation de l'invention, être des moyens de mesure en temps réel au sens de la terminologie couramment utilisée, ou ils peuvent être programmés pour prendre des mesures successives à intervalle de temps prédéfini selon les critères précités.

Le paramètre caractéristique P est, avantageusement, une grandeur physico-chimique dont la valeur est représentative du fluide 110 et de son transport au sein du dispositif de distribution 100. Selon différents exemples de réalisation de l'invention et selon la nature du fluide 110, le paramètre caractéristique P pourra être, de manière non exhaustive, la pression, la température, le débit, la composition du fluide 110 en un composant particulier, ou une combinaison de deux ou plusieurs de ces grandeurs.

Selon l'invention, le dispositif de distribution 100 comprend en outre un module 6 configuré pour calculer une valeur seuil glissante St du paramètre caractéristique P et pour comparer cette valeur seuil glissante St à une valeur instantanée Vt du même paramètre caractéristique P, mesurée par lesdits moyens de mesure 5. Le dispositif de distribution 100 selon l'invention comprend également des moyens 7 configurés pour commander, en fonction du résultat de la comparaison de la valeur instantanée Vt précitée avec la valeur seuil glissante St, l'ouverture/fermeture partielle progressive de la vanne de décharge 4.

Le fonctionnement du dispositif de distribution 100 selon l'invention est plus précisément illustré par les figures 2 et 3, respectivement selon un premier et un deuxième modes de réalisation.

Plus précisément, la figure 2 comprend une première courbe (courbe du haut) sur laquelle sont schématiquement illustrées, d'une part (courbe C1 en trait plein), un exemple de variation du paramètre caractéristique P lorsque la vanne de décharge 4 est pilotée par le dispositif de distribution 100 selon l'invention en accord avec le procédé selon l'invention mis en œuvre par ce dispositif et, d'autre part (courbe C2 en tirets), la variation correspondante de la valeur seuil glissante St précédemment définie.

Il va de soi que le profil général de variation du paramètre caractéristique P a été choisi pour illustrer le fonctionnement et les bénéfices de l'invention : s'il illustre des tendances de variation couramment rencontrées sur les installations industrielles, il ne les représente pas précisément et doit être compris comme un exemple d'illustration.

D'une manière générale, l'invention prévoit que le module 6 calcule, à intervalles de temps prédéfinis non représentés sur les figures, une valeur moyenne glissante des valeurs instantanées Vt sur un intervalle de temps Dt préalablement défini.

Plus précisément, l'invention prévoit avantageusement que, à chaque instant t auquel une mesure du paramètre caractéristique P est réalisée par les moyens 5 précités, une moyenne des valeurs instantanées Vt de ce paramètre P est effectuée par le module de calcul 6 sur un intervalle de temps Dt dont la borne supérieure est ledit instant t précité.

Avantageusement, l'intervalle de temps Dt sur lequel est calculée la moyenne glissante est au moins supérieure à 10 secondes. Selon un mode de réalisation particulièrement avantageux, mais non exclusif, de l'invention, cet intervalle de temps Dt est de l'ordre de 30 à 40 secondes.

La valeur seuil glissante St selon l'invention est obtenue par ajout, à la valeur moyenne glissante Mt, d'une valeur fixe préalablement déterminée. Cette valeur fixe est, par exemple, mais de manière non exclusive, définie par un étalonnage préalable de l'installation industrielle et/ou de la ligne de distribution dans laquelle est placé le dispositif de distribution 100 selon l'invention. Elle peut également être définie comme une valeur de marge de sécurité calculée en fonction des paramètres de l'installation industrielle.

En référence à la figure 2, la moyenne glissante initiale est associée à une valeur seuil glissante initiale St0, établie par le module de calcul 6 à partir des valeurs instantanées du paramètre P mesurées sur l'intervalle de temps défini par l'instant initial t0 et un instant antérieur t0-Dt non représenté sur la figure 2.

Lorsque la valeur instantanée, mesurée, du paramètre caractéristique P, varie, la moyenne glissante est ajustée ainsi que, par voie de conséquence, la valeur seuil glissante St.

Ainsi, en référence à la figure 2, à un premier instant t1, le paramètre P a atteint une valeur Vt1, inférieure à la valeur Vt0. A ce premier instant t1, la moyenne glissante est calculée à partir des valeurs du paramètre P mesurées successivement au cours de l'intervalle de temps prédéfini Dt précédant ce premier instant t1. Une nouvelle valeur seuil glissante St1 résulte alors de la nouvelle moyenne glissante, et ainsi de suite jusqu'à ce que le paramètre P franchisse, à un deuxième instant t2, ultérieur au premier instant t1, une valeur Vt2 égale à la valeur seuil glissante St2 calculée à ce deuxième instant t2.

Selon l'invention, le module de calcul 6 est configuré pour comparer, à chaque instant t auquel est réalisée une mesure du paramètre caractéristique P, la valeur seuil glissante St avec la valeur instantanée mesurée Vt dudit paramètre P, et pour, en fonction du résultat de cette comparaison, commander les moyens 7 précédemment définis à ouvrir partiellement progressivement la vanne de décharge 4, permettant ainsi une évacuation partielle progressive du fluide 110 présent dans la canalisation de décharge 2.

En d'autres termes, selon l'exemple de réalisation plus particulièrement illustré par la figure 2, au deuxième instant t2, la valeur instantanée Vt2 du paramètre P étant supérieure à la valeur seuil glissante St2 calculée sur l'intervalle de temps défini par les instants t2 - Dt et t2, la vanne de décharge 4 est commandée à s'ouvrir partiellement de manière progressive.

Selon l'invention, le module de calcul 6 est configuré pour continuer à actualiser, en temps réel, la valeur seuil glissante St et pour commander les moyens 7, précédemment définis, à ouvrir progressivement la vanne de décharge 4, tant que la valeur instantanée, mesurée, Vt, du paramètre caractéristique P est supérieure à la valeur seuil glissante, calculée, St, et ce jusqu'à un troisième instant t3 auquel le taux d'ouverture de la vanne de décharge 4, illustré par la courbe C3 en traits pointillés sur la figure 2 (courbe du bas), atteint un taux prédéfini d'ouverture T0.

Selon l'invention, à ce troisième instant t3, le module de calcul 6 est configuré pour définir une valeur seuil fixe ST du paramètre P et transformer ainsi la valeur seuil glissante en valeur seuil fixe. En d'autres termes, dès lors que la vanne de décharge 4 atteint le taux d'ouverture prédéfini T0, l'invention prévoit que la valeur seuil glissante St prenne une valeur fixe ST, constante, et que cette dernière soit égale à la valeur seuil glissante St3 à l'instant t3.

L'invention prévoit ensuite que la vanne de décharge 4 continue à être pilotée au-delà du taux d'ouverture prédéfini T0, jusqu'à ce que la valeur instantanée Vt, mesurée, du paramètre caractéristique P, se stabilise à une valeur sensiblement égale à la valeur seuil fixe, constante, ST, précitée.

En d'autres termes, selon l'exemple de réalisation plus particulièrement illustré par la figure 2, l'invention prévoit :
- dans un premier régime de fonctionnement, que la valeur seuil glissante St soit actualisée en temps réel et comparée, en temps réel, à la valeur instantanée, mesurée, Vt, du paramètre P, le résultat de cette comparaison gouvernant l'ouverture de la vanne de décharge 4,
- dans un deuxième régime de fonctionnement, dès lors que la vanne de décharge 4 est pilotée en régulation de la valeur instantanée Vt du paramètre P, que la valeur seuil St soit fixée à une valeur constante ST si la vanne de décharge 4 atteint un taux fixe prédéfini d'ouverture.

Le premier régime de fonctionnement précité peut comporter un régime transitoire de l'ouverture de la vanne de décharge dès lors que la valeur instantanée du paramètre caractéristique P dépasse la valeur seuil St réglable, et le deuxième régime de fonctionnement peut être considéré comme un régime continu de décharge, mis en œuvre dès lors qu'une décharge du fluide 110 par la canalisation de décharge 2 s'avère indispensable en continu.

Avantageusement, le taux d'ouverture précité T0 de la vanne de décharge 4 à partir duquel le module de calcul 6 est configuré à fixer une valeur seuil constante du paramètre P est de l'ordre de quelques pourcents de l'ouverture complète de cette vanne : préférentiellement, mais de manière non exclusive, il est de l'ordre de 5% de l'ouverture complète de la vanne de décharge 4.

Il résulte de ce qui précède que l'invention permet d'actualiser à chaque instant les paramètres de pilotage de l'état de la vanne de décharge 4, réalisant ainsi une optimisation des commandes d'ouverture ou de fermeture de cette dernière.

Il est à noter que l'ouverture partielle progressive de la vanne de décharge 4 permet d'éviter toute variation brutale au sein de la canalisation de décharge 2, variation brutale qui pourrait se traduire par un phénomène connu sous la désignation de "coup de bélier" pouvant endommager des composants de la canalisation de décharge 2 proprement dite, et pouvant se répercuter jusqu'à la canalisation de distribution 1, risquant alors non seulement d'endommager des composants de celle-ci, mais risquant également, par le biais d'éventuelles variations brutales du paramètre P consécutivement à un tel "coup de bélier", de fausser le calcul de la moyenne glissante Mt, et donc de dégrader la qualité du pilotage de la vanne de décharge 4.

Avantageusement, la vanne de décharge 4 est, par exemple, une vanne dont l'ouverture et la fermeture sont commandées par un moteur de type pas à pas, afin de faciliter son ouverture et sa fermeture partielle progressive.

Il est à noter aussi que si, selon l'exemple illustré par la figure 2, la comparaison est effectuée, à chaque instant t, entre la valeur instantanée Vt et la valeur moyenne glissante Mt calculée à ce même instant t, cette comparaison pourrait, à titre d'exemple non limitatif, et sans que cela nuise à l'invention, être effectuée, à chaque instant t, entre la valeur moyenne glissante Mt précitée et la valeur instantanée V(t-Dt) mesurée à l'instant t-Dt.

La figure 3 illustre un deuxième mode de réalisation de l'invention. Sur cette figure sont représentées les courbes C1, C2 et C3 présentes sur la figure 2 et explicitées précédemment. La figure 3 présente, en partie haute, un exemple de variation d'un paramètre P caractéristique du fluide 110 (courbe C1 en trait plein) et la variation associée de la valeur seuil glissante St (courbe C3 en tirets).

Selon le deuxième mode de réalisation de l'invention illustré par la figure 3, une pré-ouverture de la vanne de décharge 4 est commandée, à un quatrième instant t4, par les moyens de commande 7 sur la base d'une information préalablement reçue du module de calcul 6. Cette pré-ouverture est, par exemple, commandée lorsqu'une variation du paramètre caractéristique P est prévue dans l'installation industrielle, variation pouvant impliquer une ouverture de la vanne de décharge 4 selon le mode de fonctionnement par exemple illustré par la courbe C1. Une telle configuration permet, en particulier, d'anticiper des variations importantes du paramètre P et, donc, de protéger les composants de la ligne de distribution dans laquelle est installé le dispositif de distribution 100 selon l'invention. La pré-ouverture est dimensionnée en fonction des caractéristiques de l'installation, et notamment des dimensions des conduits et du débit du fluide circulant dans ces conduits. On comprend que selon la teneur de la variation programmée, la pré-ouverture réalisée instantanément en prévision de cette variation à venir du paramètre P est plus ou moins grande.

Selon l'exemple plus particulièrement illustré par la figure 3, la vanne de décharge 4 est commandée, à l'instant t4 précité, à s'ouvrir à une valeur T4 dont la valeur est au-delà du taux d'ouverture T0 précédemment défini, instant t4 auquel le paramètre P augmente de manière brutale.

Conformément à ce qui précède, dès lors que l'ouverture de la vanne de décharge dépasse le taux d'ouverture prédéfini, l'invention prévoit que le module de calcul 6 soit configuré à définir alors une valeur seuil St4 constante, correspondant, par exemple, à la valeur instantanée Vt4 mesurée, à l'instant t4, du paramètre P, et que la vanne de décharge 4 soit pilotée par suite pour réguler le paramètre P autour de cette valeur seuil St4.

L'invention telle qu'elle vient d'être décrite atteint bien les buts qu'elle s'était fixés, en ce qu'elle permet, par des moyens et par un procédé simple, de réaliser le pilotage d'une vanne de décharge 4 d'un dispositif 100 de distribution d'un fluide 110 dans une installation industrielle.

Ce pilotage, précis et réactif aux variations d'une grandeur P caractéristique de la distribution du fluide 110, permet tout à la fois de protéger les composants de la ligne de distribution de toute surcharge, tout en optimisant les quantités de fluide 110 évacuées par la vanne de décharge 4 et, donc, en limitant les pertes de ce fluide 110.

En particulier, si l'invention a été décrite et illustrée dans le présent document selon des modes de réalisation dans lesquels la vanne de décharge 4 est commandée à s'ouvrir dès lors que la valeur instantanée Vt du paramètre caractéristique P est supérieure à une valeur seuil glissante St, l'invention s'étend à des modes alternatifs de réalisation selon lesquels la vanne de décharge 4 est commandée à s'ouvrir dès lors que la valeur instantanée Vt précitée devient inférieure à la valeur seuil glissante St précédemment citée.

## Revendications

1. Dispositif (100) de distribution d'un fluide (110) dans une installation industrielle, le dispositif de distribution (100) comprenant au moins une canalisation (1) de distribution du fluide configurée pour transporter le fluide (110) entre une zone amont (200) et un client aval (300) du dispositif de distribution (100), une canalisation (2) de décharge issue de la canalisation de distribution (1), une vanne de distribution (3), placée sur la canalisation de distribution (1) et contrôlant la distribution de fluide (110) entre la zone amont (200) et le client aval (300), une vanne de décharge (4) placée sur la canalisation de décharge (2), ainsi que des moyens (5) de mesure en temps réel d'un paramètre (P) caractéristique de la distribution du fluide (110) au sein de l'une des canalisations (1, 2),
**caractérisé en ce que** le dispositif de distribution (100) comprend un module (6) de calcul d'une valeur seuil glissante (St) du paramètre caractéristique (P) ainsi que des moyens (7) configurés pour commander l'ouverture ou la fermeture progressive partielle de la vanne de décharge (4) en fonction du résultat de la comparaison de ladite valeur seuil glissante (St) avec une valeur instantanée (Vt) du paramètre caractéristique (P) mesurée par les moyens de mesure (5).

2. Dispositif selon la revendication 1, **caractérisé en ce que** le module de calcul (6) est configuré pour fixer la valeur seuil glissante (St) à une valeur fixe (ST) dès lors que la vanne de décharge (4) atteint un taux d'ouverture prédéfini (T0).

3. Dispositif selon la revendication précédente, **caractérisé en ce que** la valeur seuil fixe (ST) est la valeur seuil calculée par le module de calcul (6) à l'instant (t2) auquel la valeur mesurée instantanée mesurée (Vt2) du paramètre caractéristique (P) franchit la valeur seuil glissante (St2).

4. Dispositif selon l'une quelconque des revendications 2 ou 3, **caractérisé en ce que** le taux d'ouverture prédéfini (T0) est de l'ordre de 5%.

5. Dispositif selon l'une quelconque des revendications précédentes, **caractérisé en ce que** les moyens (5) de mesure comprennent au moins un capteur de pression d'un gaz.

6. Dispositif selon l'une quelconque des revendications précédentes, **caractérisé en ce que** la vanne de décharge (4) est une vanne du type pas à pas.

7. Procédé de distribution d'un fluide (110) dans une installation industrielle, **caractérisé en ce qu'**il comporte :
- une étape de mesure, en temps réel, d'un paramètre (P) caractéristique de la distribution du fluide (110), par des moyens (5) de mesure en temps réel placés sur une canalisation de distribution (1) du fluide (110),
- une étape de calcul d'une valeur moyenne glissante (Mt) du paramètre caractéristique (P) sur un intervalle de temps (Dt) prédéfini,
- une étape de définition d'une valeur seuil glissante (St) à partir de la valeur moyenne glissante (Mt),
- une étape de comparaison de la valeur seuil glissante (St) à une valeur instantanée (Vt), mesurée en temps réel, du paramètre caractéristique (P),
- une étape d'ouverture partielle progressive, en fonction du résultat de la comparaison effectuée lors de l'étape précédente, d'une vanne de décharge (4) placée sur une canalisation de décharge (2) débouchant dans la canalisation de distribution (1).

8. Procédé selon la revendication précédente, **caractérisé en ce que** l'intervalle de temps (Dt) est au moins supérieur à 10 secondes.

9. Procédé selon l'une ou l'autre des revendications 7 ou 8, **caractérisé en ce que** l'intervalle de temps (Dt) est de l'ordre de 30 à 40 secondes.

10. Procédé selon l'une quelconque des revendications 7 à 9, **caractérisé en ce qu'**il comporte :
- une étape de comparaison de l'ouverture de la vanne de décharge (4) à un taux d'ouverture prédéfini (T0),
- une étape de définition d'une valeur seuil fixe (ST) dès lors que le taux d'ouverture de la vanne de décharge (4) est supérieur au taux d'ouverture prédéfini (T0).

11. Procédé selon la revendication précédente, **caractérisé en ce que** la valeur seuil fixe (ST) est la valeur seuil calculée par le module de calcul (6) à l'instant (t2) auquel la valeur mesurée instantanée mesurée (Vt2) du paramètre caractéristique (P) franchit la valeur seuil glissante (St2).

12. Procédé selon l'une des revendications 10 ou 11, **caractérisé en ce que** le taux d'ouverture prédéfini (T0) est de l'ordre de 5%.

13. Procédé selon l'une quelconque des revendications 7 à 12, dans lequel le type du fluide (110) est parmi un gaz, un mélange de gaz, un liquide, un mélange de liquides, ou un mélange de liquides et de gaz.

14. Procédé selon l'une quelconque des revendications 7 à 13, dans lequel le paramètre caractéristique (P) du fluide (110) est l'un parmi la pression, le débit, le niveau, la température, la pureté ou la composition de ce dernier.

## Patentansprüche

1. Vorrichtung (100) zur Verteilung eines Fluids (110) in einer industriellen Anlage, wobei die Vorrichtung zur Verteilung (100) wenigstens eine Rohrleitung (1) zur Verteilung des Fluids, die dafür ausgelegt ist, das Fluid (110) zwischen einem stromaufwärtigen Bereich (200) und einem stromabwärtigen Verbraucher (300) der Vorrichtung zur Verteilung (100) zu transportieren, eine Ablassrohrleitung (2), die von der Rohrleitung zur Verteilung (1) abzweigt, ein Verteilerventil (3), das an der Rohrleitung zur Verteilung (1) angeordnet ist und die Verteilung von Fluid (110) zwischen dem stromaufwärtigen Bereich (200) und dem stromabwärtigen Verbraucher (300) steuert, ein Ablassventil (4), das an der Ablassrohrleitung (2) angeordnet ist, sowie Mittel (5) zur Messung, in Echtzeit, eines charakteristischen Parameters (P) der Verteilung des Fluids (110) innerhalb einer der Rohrleitungen (1, 2) umfasst,
**dadurch gekennzeichnet, dass** die Vorrichtung zur Verteilung (100) ein Modul (6) zur Berechnung eines gleitenden Schwellenwertes (St) des charakteristischen Parameters (P) sowie Mittel (7), die dafür ausgelegt sind, das allmähliche teilweise Öffnen oder Schließen des Ablassventils (4) in Abhängigkeit vom Ergebnis des Vergleichs des gleitenden Schwellenwertes (St) mit einem von den Mitteln zur Messung (5) gemessenen Momentanwert (Vt) des charakteristischen Parameters (P) zu steuern, umfasst.

2. Vorrichtung nach Anspruch 1, **dadurch gekennzeichnet, dass** das Modul zur Berechnung (6) dafür ausgelegt ist, den gleitenden Schwellenwert (St) auf einen festen Wert (ST) festzulegen, sobald das Ablassventil (4) einen vordefinierten Öffnungsgrad (T0) erreicht.

3. Vorrichtung nach dem vorhergehenden Anspruch, **dadurch gekennzeichnet, dass** der feste Schwellenwert (ST) der Schwellenwert ist, der von dem Modul zur Berechnung (6) zu dem Zeitpunkt (t2) berechnet wird, zu dem der gemessene Momentanmesswert (Vt2) des charakteristischen Parameters (P) den gleitenden Schwellenwert (St2) überschreitet.

4. Vorrichtung nach einem der Ansprüche 2 oder 3, **dadurch gekennzeichnet, dass** der vordefinierte Öffnungsgrad (T0) in der Größenordnung von 5 % liegt.

5. Vorrichtung nach einem der vorhergehenden Ansprüche, **dadurch gekennzeichnet, dass** die Mittel (5) zur Messung wenigstens einen Drucksensor für ein Gas umfassen.

6. Vorrichtung nach einem der vorhergehenden Ansprüche, **dadurch gekennzeichnet, dass** das Ablassventil (4) ein Schrittventil ist.

7. Verfahren zur Verteilung eines Fluids (110) in einer industriellen Anlage, **dadurch gekennzeichnet, dass** es umfasst:
- einen Schritt der Messung, in Echtzeit, eines charakteristischen Parameters (P) der Verteilung des Fluids (110) durch Mittel (5) zur Messung in Echtzeit, die an einer Rohrleitung zur Verteilung (1) des Fluids (110) angeordnet sind,
- einen Schritt der Berechnung eines gleitenden Mittelwertes (Mt) des charakteristischen Parameters (P) über einem vordefinierten Zeitintervall (Dt);
- einen Schritt der Definition eines gleitenden Schwellenwertes (St) aus dem gleitenden Mittelwert (Mt),
- einen Schritt des Vergleichs des gleitenden Schwellenwertes (St) mit einem in Echtzeit gemessenen Momentanwert (Vt) des charakteristischen Parameters (P),
- einen Schritt des allmählichen teilweisen Öffnens, in Abhängigkeit vom Ergebnis des im vorhergehenden Schritt durchgeführten Vergleichs, eines Ablassventils (4), das an einer in die Rohrleitung zur Verteilung (1) mündenden Ablassrohrleitung (2) angeordnet ist.

8. Verfahren nach dem vorhergehenden Anspruch, **dadurch gekennzeichnet, dass** das Zeitintervall (Dt) mindestens größer als 10 Sekunden ist.

9. Verfahren nach einem der Ansprüche 7 oder 8, **dadurch gekennzeichnet, dass** das Zeitintervall (Dt) in der Größenordnung von 30 bis 40 Sekunden liegt.

10. Verfahren nach einem der Ansprüche 7 bis 9, **dadurch gekennzeichnet, dass** es umfasst:
- einen Schritt des Vergleichs der Öffnung des Ablassventils (4) mit einem vordefinierten Öffnungsgrad (T0),
- einen Schritt der Festlegung eines festen Schwellenwertes (ST), sobald der Öffnungsgrad des Ablassventils (4) größer als der vordefinierte Öffnungsgrad (T0) ist.

11. Verfahren nach dem vorhergehenden Anspruch, **dadurch gekennzeichnet, dass** der feste Schwellenwert (ST) der Schwellenwert ist, der von dem Modul zur Berechnung (6) zu dem Zeitpunkt (t2) berechnet wird, zu dem der gemessene Momentanmesswert (Vt2) des charakteristischen Parameters (P) den gleitenden Schwellenwert (St2) überschreitet.

12. Verfahren nach einem der Ansprüche 10 oder 11, **dadurch gekennzeichnet, dass** der vordefinierte Öffnungsgrad (T0) in der Größenordnung von 5 % liegt.

13. Verfahren nach einem der Ansprüche 7 bis 12, wobei die Art des Fluids (110) ein Gas, eine Gasmischung, eine Flüssigkeit, eine Flüssigkeitsmischung oder eine Mischung von Flüssigkeiten und Gasen ist.

14. Verfahren nach einem der Ansprüche 7 bis 13, wobei der charakteristische Parameter (P) des Fluids (110) eines von dem Druck, der Durchflussmenge, dem Füllstand, der Temperatur, der Reinheit oder der Zusammensetzung dieses Letzteren ist.

## Claims

1. Distribution device (100) for distributing a fluid (110) in an industrial facility, the distribution device (100) comprising at least one fluid distribution pipe (1) configured to transport the fluid (110) between an upstream area (200) and a downstream customer (300) of the distribution device (100), a discharge pipe (2) originating from the distribution pipe (1), a distribution valve (3), placed on the distribution pipe (1) and controlling the distribution of fluid (110) between the upstream area (200) and the downstream customer (300), a discharge valve (4) placed on the discharge pipe (2), and measurement means (5) for measuring, in real time, a characteristic parameter (P) of the distribution of the fluid (110) within one of the pipes (1, 2),
**characterized in that** the distribution device (100) comprises a module (6) for calculating a sliding threshold value (St) of the characteristic parameter (P), and means (7) configured to command the partial gradual opening or closing of the discharge valve (4) as a function of the result of the comparison between said sliding threshold value (St) and an instantaneous value (Vt) of the characteristic parameter (P) measured by the measurement means (5).

2. Device according to Claim 1, **characterized in that** the calculation module (6) is configured to set the sliding threshold value (St) at a fixed value (ST) as soon as the discharge valve (4) reaches a predefined degree of opening (T0).

3. Device according to the preceding claim, **characterized in that** the fixed threshold value (ST) is the threshold value calculated by the calculation module (6) at the instant (t2) at which the measured instantaneous measured value (Vt2) of the characteristic parameter (P) exceeds the sliding threshold value (St2).

4. Device according to either of Claims 2 or 3, **characterized in that** the predefined degree of opening (T0) is of the order of 5%.

5. Device according to any one of the preceding claims, **characterized in that** the measurement means (5) comprise at least one gas pressure sensor.

6. Device according to any one of the preceding claims, **characterized in that** the discharge valve (4) is a stepper motor valve.

7. Distribution method for distributing a fluid (110) in an industrial facility, **characterized in that** it comprises:
- a step of measuring, in real time, a characteristic parameter (P) of the distribution of the fluid (110), by real-time measurement means (5) placed on a distribution pipe (1) for distributing the fluid (110),
- a step of calculating a sliding average value (Mt) of the characteristic parameter (P) over a predefined time interval (Dt),
- a step of defining a sliding threshold value (St) from the sliding average value (Mt),
- a step of comparing the sliding threshold value (St) with an instantaneous value (Vt), measured in real time, of the characteristic parameter (P),
- a step of gradual partial opening, as a function of the result of the comparison carried out during the preceding step, of a discharge valve (4) placed on a discharge pipe (2) opening out in the distribution pipe (1).

8. Method according to the preceding claim, **characterized in that** the time interval (Dt) is at least greater than 10 seconds.

9. Method according to either of Claims 7 or 8, **characterized in that** the time interval (Dt) is of the order of 30 to 40 seconds.

10. Method according to any one of Claims 7 to 9, **characterized in that** it comprises:
- a step of comparing the opening of the discharge valve (4) with a predefined degree of opening (T0),
- a step of defining a fixed threshold value (ST) as soon as the degree of opening of the discharge valve (4) is greater than the predefined degree of opening (T0).

11. Method according to the preceding claim, **characterized in that** the fixed threshold value (ST) is the threshold value calculated by the calculation module (6) at the instant (t2) at which the measured instantaneous measured value (Vt2) of the characteristic parameter (P) exceeds the sliding threshold value (St2).

12. Method according to either of Claims 10 or 11, **characterized in that** the predefined degree of opening (T0) is of the order of 5%.

13. Method according to any one of Claims 7 to 12, in which the type of fluid (110) is either a gas, a mixture of gases, a liquid, a mixture of liquids, or a mixture of liquids and gases.

14. Method according to any one of Claims 7 to 13, in which the characteristic parameter (P) of the fluid (110) is either the pressure, the flow rate, the level, the temperature, the purity or the composition thereof.
